# EUROPEAN PATENT SPECIFICATION

(11) **EP 4 069 972 B1**
(45) Date of publication and mention of the grant of the patent: **12.02.2025**
(21) Application number: 20820565.8
(22) Date of filing: 02.12.2020
(51) Int. Cl.: F03G 7/00, F03G 7/06, C25B 1/04, C25B 1/55

(54) **MOTOR BASED IN MECHANISM OF MUSCULAR CONTRACTION**
MOTOR AUF DER BASIS DES MUSKELKONTRAKTIONSMECHANISMUS
MOTEUR BASÉ SUR LE MÉCANISME DE CONTRACTION MUSCULAIRE

(30) Priority: 02.12.2019 LU 101512
(43) Date of publication of application: 12.10.2022
(73) Proprietor: Solis Herrera, Arturo, CP20000 Aguascalientes (MX)
(72) Inventor: Solis Herrera, Arturo, CP20000 Aguascalientes (MX)
(74) Representative: Bals & Vogel Patentanwälte PartGmbB
(86) International application number: PCT/IB2020/061403
(87) International publication number: WO 2021/111341

(56) References cited:
- WO-A1-03/030194
- WO-A1-2016/125098
- US-A1- 2008 213 641

## Description

### FIELD OF THE INVENTION

This invention relates to a motor device that is arranged to be actuated in response to an external stimulus comprising at least one actuator and at least one energy source, wherein the energy source supplies the external stimulus, or to a method for the actuation of a motor device, which is arranged to be actuated in response to an external stimulus comprising at least one actuator and at least one energy source, wherein the energy source supplies the external stimulus for obtaining alternative energy.

### BACKGROUND OF THE INVENTION

Movement is based on increasing energy input so motors can conduct some kind of movement. The more energy, the more mechanical or electrical movement. However, it is not sustainable due to current diverse strategies to increase energy input since energy is about to end, like oil, or is very contaminant like carbon, or risky like nuclear energy. Thereby it is necessary to design a completely new type of motor.

The present patent is based on the finding that muscular contraction implies a low chemical energy level and relaxation a higher energy level.

It is an ancient belief that muscular contraction involves energy expenditure. In general, chemical energy for the muscle is supplied by ATP, wrongly considered as universal currency of energy in biology.

It is the current dogma, that when ATP is degraded to ADP energy is absorbed. When ATP is transformed to ADP energy is released, therefore more ATP leads to more muscular contraction.

But this concept is based in the concept that glucose is the source of energy of the cell or the body. Glucose (from food) after several biochemical steps finally is used to synthesize ATP in mitochondria.

It is considered that glucose is the only source of carbon chains that is used to synthesize almost 99 % of biomolecules, and however, this knowledge has to be challenged.

However, an innovative, surprising new finding of the present is, that when ATP is degraded to ADP energy is absorbed and when ADP is transformed to ATP energy is released.

Another source of energy of our body is the chemical energy that emanates from melanin in form of diatomic hydrogen and high energy electrons. Due to constant water dissociation by melanin during night and day; the level of diatomic hydrogen and the flow of high-energy electrons are kept within a certain range the most time.

This level of chemical energy can be considered as basal, fundamental or common energy levels. The function of the cell (and the body) is entirely dependent of this chemical level of energy.

Every single biochemical reaction that happens in the cell arises from above mentioned energetic level, thereafter the 90 % of the intracellular biochemical processes are a finely tuned energy decrease. Therefore, the chemical energy level is accurately diminished in order cell functions and processes occur.

### Cell muscle relaxation and contraction

When a muscle is relaxed, it is soft and when it is contracted, it is rigid (stiff).

The differences between anatomical states are not only on a macroscopic level, but also on a biochemical level. The relaxed state is a highly organized molecular arrangement, meaning high organizations are joint with a high energy level in any system.

The smaller part of the muscles (e.g. protomyosins) consists of molecules, which have no intermediate covalent bonds. They are joined by other forces like Van der Waals, hydrogen bonds and electrical attractions.

When the chemical energy level of the muscle cell is diminished the muscle tends to contract. Contraction is a lowered organized molecular arrangement and thereby requiring less chemical energy.

When the chemical energy level of tissue is elevated, the muscle is relaxed. The attractions between molecules are neutralized and repulsions are favored, meaning the muscle is soft and elongated.

When ATP is downgraded to ADP chemical energy is absorbed. Therefore, when a muscle contracts by ATP degradation the chemical energy is diminished and not increased. Thereby, the chemical energy level of the tissue decreases, which results in keeping the muscle relaxed and increasing entropy. Resulting in diminishing the distance between the molecules building the muscle. Subsequently the muscle becomes rigid and is contracted. When the stimulus for the depolarization of the membrane and therefore for the degradation of ATP disappears, the ADP is regenerated to ATP using the existing chemical energy provided by melanin. When the ADP is reformed to ATP, a minimal energy release occurs, which mainly depends on the chemical energy resulting from dissociation and reformation of water molecules by melanin.

This finding explains many observed characteristics of muscle function. Moreover, most animals weight thousands kg and move with a small electric current sustained by the sun via an energy source.

The known processes used up to now to separate water molecules in hydrogen and oxygen atoms, to create fuel as an energy source, are among others:
a) the application of intense electrical currents,
b) the heating of water until 2000°C,
c) the separation of water molecules by solar electrochemical (photoelectrochemical) methods, which integrate a semi-conductor material and a water electrolyzer in a monolithic design to produce hydrogen directly from water using light as the unique energy source. As a disadvantage, the ideal and the most adequate material are unknown because some materials are very expensive, some are polluting and others are inefficient. Further, most of them decompose fast, others are damaged with water and some others require exceedingly strict work conditions. That is why cost-effectiveness has not been feasible up to now from an economic, environmental and political point of view, and others are not appropriate for large scale application, their usefulness being thus reduced to some specific and small processes,
d) another method to separate water is by solar energy concentration (e.g. with mirrors), with the object to elevate water temperature until 2000°C. This is the required temperature used in laboratory to divide the water molecule,
e) one further method is by using photosynthetic microbes as green algae and cyanobacterium, those produce hydrogen from water as part of metabolic activities using light energy as a main source. As a disadvantage oxygen is produced as well as hydrogen, therefore the technology must solve the limitation that is the sensibility to oxygen in the enzymatic systems. Besides, hydrogen production from photosynthetic organisms is currently too low to be economically viable,
f) still another method is water electrolysis, using electricity to separate the water molecule in its compounds (hydrogen and oxygen atoms). Two kinds of electrolyzers are used for commercial production of hydrogen: the alkaline and the membrane of protons interchange. These approaches cannot compete with the hydrogen produced from natural gas.

A natural material that can also divide or separate the water molecules is chlorophyll. However, its affinity with light is between 400 nm and about 700 nm and the rest of the light energy is lost. That is why it is estimated that 80% of used energy is wasted. Moreover, its production is complex and expensive, requiring for example temperatures of -8°C.

In contrast to that melanins can be used as electrolyzing water elements, because their affinity in the spectrum ranges from 200 nm to 900 nm, and because of the physiological characteristics of the tissues in which melanin generally occurs. When melanin is illuminated, a photolysis of the water molecules occurs, thus generating oxygen and hydrogen atoms, besides other products such as OH, hydrogen peroxide, anion superoxide and high energy electrons, as well as support and catalyze the reverse reaction. This is, when melanin is illuminated with visible and/or invisible light, a highly ordered photolysis occurs, generating molecular hydrogen and molecular oxygen. Melanin is able to support and catalyze the reverse reaction.

Previously the photohydrolitic and hydrosynthetic properties of melanin, the generated potential changes registered in an electroretinogram occurred after an intense non-physiological luminous stimuli applied to the retinal pigmented epithelium, is interpreted as physicochemical response to light absorption by melanin and adjoining tissues. In the early sixties, it was discovered that intense non-physiological luminous stimuli applied to the pigmented ephithelium of the retina, generated potential changes throughout it. This response to melanin reflects a physicochemical response to light absorption by melanin, similar in some way to the early potential of electroretinogram receptors generated by opsin molecules.

The state of the art points out that the clinical application to the melanin response has not been found yet. Portions surrounding the molecule collect photon energy and by that the water molecule is divided, meaning is oxided, separating hydrogen from oxygen. Afterwards the hydrogen, the carrier of energy, is caught possibly by FAD (flavin adenine dinucleotide) and NAD (nicotinamide adenine dinucleotide) for its further processing by eukaryote cells to energize a reaction among the many that occur every second. Part of the energy that is released with the dissociation of water by melanin is captured by molecular hydrogen, which is a carrier of energy. As molecular hydrogen is released symmetrically and in all directions, the environment surrounding melanin begins to have elevated levels of molecular hydrogen, which, following the diffusion equations extend throughout the cytoplasm of the cell, because the molecular hydrogen cannot be combined with water. During the journey to the membrane cell, various organelles, and systems are capturing the molecular hydrogen. However, also the structure of (primary, secondary, third, fourth) melanin permits the occurrence of the opposite reaction, i.e. the union of hydrogen and oxygen, or in other words, the reduction of oxygen, that produces water and electricity. The absorption of light by the melanin starts an ionic event that finally provides electricity, because the sole division of water molecules is not enough; the reversibility of the reaction has to happen, e.g. the reunion of the hydrogen and oxygen atoms.

The object of the invention is to create a motor device of the previously mentioned kind, whose energy is created continuously and in a cost-efficient manner. Further, it is the object of the present invention to create an ecological motor device whose energy can be recycled. This object is solved according to the invention by all the features of claim 1 and a method according to claim 18. The dependent patent claims specify possible embodiments.

Prior art Document WO 03/030194 A1 discloses a motor device comprising a melanin-like element and prior art document WO 2016/125098 A1 discloses a process of generating electric current, wherein melanin, melanin precursors or melanin derivatives in aqueous solution within a container absorb energy obtained by an energy source.

### DETAILED DESCRIPTION OF THE PREFERRED EMBODIMENT

The motor device of the present invention should be based on molecules with adequate characteristics, this means: when a small current is applied, the molecule tend to enlarge, and when this current is lowered, the molecule tend to contract itself.

With the sufficient amount of molecules moving coordinately, the movement will be significant and useful.

Following common observations, a motor can be small and everyone may have its own source of energy based on melanin. The problem to move a vehicle more than 1000 kg, can be resolved by many small motors working in the same direction and on the same basis. When a small current is applied, the central element is relaxed. However, when this current is attenuated, the molecule that acting as a core part, will move (contract). All of these molecules must be coordinated in a very accurate way so the movement can be useful. Advantageously, a device could move up and down in a very sustainable way and with small energy expenditure.

The special benefit of this invention is that the energy source is melanin, melanin precursors or melanin derivatives providing energy. Melanin is a complex polymers found in species of all biological kingdoms with a multifaceted utility related to physiology such as protection from visible and UV light, decreased oxidative stress, energy transduction and Fe(III) reduction. However, the function of melanin related to its interaction with ionizing radiation (gamma radiation) is still unknown. Melanin plays a role in decreasing radiosensitivity of human melanoma cells and melanized microbial species thrive in highly radioactive environments, such as cooling pools of nuclear reactors, the stratosphere and space stations.

Furthermore, certain melanized microbes are existent in environments characterized by elevated levels of ionizing radiation such as pyomelanin-producing bacteria found in uranium-contaminated soils and melanized fungi in radio-contaminated soils showing directional growth towards radiation sources (radiotrophism). Recently it was demonstrated that ionizing radiation changes the electronic structure of melanin and enhances the growth of several melanized fungal species, suggesting a role for melanin in this process, specifically the physico-chemical interaction between melanin and ionizing radiation. Melanin pigments are diverse in structure and function concerning effects from ionizing radiation and offer potential as manufactured radioprotective materials. The separation of water molecules into hydrogen and oxygen atoms is a highly endergonic reaction due to the stable association of hydrogen and oxygen atoms. The separation of the water molecules (in hydrogen and oxygen atoms) in the laboratory requires the use of a strong electric current or high temperature of approximately 2000°C. This is obtained by melanin at room temperature, more preferably the boiling temperature of the melanin solution that is approximately 500°C, using only the energy obtained from electromagnetic radiation, either from natural or artificial sources. It is estimated that the redox potential of oxidized form of quinone is approximately +1.1 V, which is strong enough to attract the firmly united low energy electrons from the water molecule (redox potential of +0.82 V), separating the molecules in hydrogen and oxygen atoms. The separation of the water molecules by absorbing for example electromagnetic and/or ionizing radiation emitted by the emitting radiation source, namely radiosynthesis, is nearly the same as the separation of the water molecule by photopigments via photons, namely photolysis. It is believed that the formation of the oxygen molecule during the photolysis or during the radiosynthesis requires the simultaneous loss of four electrons from two water molecules according to the reaction:

2H₂O **↔** 2H₂ + O₂ +4e-

A reaction center can only generate a positive charge or its oxidizing equivalent at the same time. This problem is solved hypothetically by the presence of four nitrogen atoms in the reaction center of the melanin molecule, each of them transferring only one electron. This nitrogen concentration, can add four positive charges upon transferring four electrons (one at each time) to the closest quinone⁺ molecule. Therefore, the present invention proposes to use the melanins as the energy source providing energy. Melanin pigments are composed of quinone moieties that are believed to be responsible for its redox behavior. The polymeric structure of melanins permits oxidation and reduction to occur simultaneously. Perhaps the most interesting aspect of any radio protective material is its requirement to withstand the oxidizing impact of ionizing radiation indefinitely, without bleaching. The events in this design may occur to a greater or lesser extent under internal or external physical or chemical stimuli. Moreover, it can be demonstrated that irradiation of melanin results in melanin oxidation over time as measured by current productions as a function of melanin concentration and time of exposure of gamma radiation. An increased oxidation of melanin in the presence of ascorbate during exposure to ionizing radiation is due to the reductive properties of ascorbate. Maintaining the radioprotective properties of melanin-like materials is the key for long-term functioning of the material. The combination of the melanin molecule with water forms a system, which captures electromagnetic or any other energy using at least two interrelated activities: removal of electrons from water and generation of a proton-gradient. Particularly, the combination of the melanin molecule with water forms a photosystem, which captures for example luminous energy using the two interrelated activities: removal of electrons from water and generation of a proton-gradient. The melanin components are in close contact among each other, which makes a fast transfer of energy easy. At three picoseconds of electromagnetic radiation and/or illumination, the melanin reaction centers respond transferring an electromagnetic-excited and/or photo-excited electron to the primary electron receptor. This transference of electrons generates a donator, positively charged and a receiver negatively charged. The importance of the formation of two species with opposite charges is seen when the reduction capacities of these two species is considered, because one of them is deficient in electrons and can accept electrons, which makes it an oxidizing agent. By contrast, the other compound has an extra electron that can be lost easily, making it a reducing agent. This event - the formation of an oxidizing agent and a reducing agent e.g. from the electromagnetic radiation and/or from illumination takes less than a billionth of a second and is the first essential step in the process of generating an electric current. Because they are charged in an opposite way, these compounds show an obvious mutual attraction. The separation of charges is stabilized by their movement to opposite sides of the molecule; being the negative compound the one that first gives its electron toward a quinone (Q1) and possibly then the electron is transferred to a second type of quinone (Q2), this producing a semi-reduced form of the quinone molecule which can be strongly linked to the reaction center of the melanin molecule. With each transfer, the electron gets closer to the reaction center of the melanin molecule. The portion of melanin, which is positively charged, is reduced, thus preparing the reaction center for example in case of photolysis for the absorption of another photon. The absorption of further electromagnetic and/or ionizing radiation and/or the absorption of a second photon sends a second electron along the way (melanin negatively charged towards the first and second quinone molecule - Q1 and Q2). This second molecule absorbs two electrons, and thus combines with two protons. The protons used in this reaction could derive from the same melanin molecule or from the surrounding water, causing a decrease in the concentration of hydrogen ions of the photosystem, what contributes to the formation of a protons gradient. In theory, the reduced quinone molecule is dissociated from the reaction center of melanin, replacing a reaction by a new quinone molecule. These reactions occur at normal temperature but when you modify for example the temperature, you can favor the reaction in one or other way, depending on the control of the other variables: pH, magnetic fields, concentrations, gases, partial pressures, shape of cells etc., and the main objective of the process. The transfer of electrons from the nitrogen of the reaction centers to the quinone⁺ is obtained by means of the passage through a positively charged tyrosine moiety. After each electron is transferred to quinone⁺, regenerating quinone, the pigment is re-oxidized (quinone⁺) after the absorption of another electron e.g. from the radiation-emitting source and/or the light source that is similarly to a photon to the reaction center. So the accumulation of four positive charges (oxidizing equivalents) by the nitrogen atoms of the reaction center is modified by the successive absorption of four electrons by the melanin reaction center during irradiation of melanin. Once the four charges have been accumulated the oxygen releasing quinone complex can catalyze the 4e- removal from 2H₂O forming an O₂ molecule (diatomic oxygen), and regenerating the totally reduced quantity of nitrogen in the reaction center. The protons produced in the radiosynthesis and/or in the photolysis are released in the medium where they contribute to the protons gradient. The reaction center must be irradiated several times before the occurrence of O₂ release and thus hydrogen (diatomic hydrogen) can be measured; this indicates that the effects of the individual irradiation reactions must accumulate before O₂ and hydrogen are released. The gases released during the radiosynthesis and/or in the photolysis, wherein the gases are mainly diatomic hydrogen and diatomic oxygen can be extracted during the process, preferably. The gases are very stable since no spark is needed to perform the radiosynthesis or the photolysis. In this case water is consumed slowly and must be replaced at least temporarily to disable the output of diatomic oxygen and diatomic hydrogen. Therefore, an advantageous aspect of the present invention is the use of the diatomic oxygen and the diatomic hydrogen, which can be extracted as gas, formed during the radiosynthesis or during the photolysis as useable energy, for example in fuel cells, or preferably as the external stimulus. The quinones are considered as carriers of mobile electrons. It is to be kept in mind that all electron transfers are exergonic and occur as the electrons are successively taken to carriers with an increasing affinity for the electrons (more positive redox potentials). The need of having electron-moving carriers is obvious. The electrons generated by the radiosynthesis or by the photolysis can pass to several inorganic receivers, which are thus reduced. These ways for electrons can lead (depending on the composition of the used mix) to the eventual reduction of nitrate molecule (NO₃) into ammoniac molecule (NH₃) or the sulphates in sulphydrides (SH⁻) reductions that change the inorganic wastes into compounds necessary for life. So the electromagnetic radiation can be used not only to reduce the most oxidized form of a carbon atom (CO₂) but also to reduce the most oxidized forms or nitrogen and sulphur. The production of one O₂ molecule requires the removal of four electrons from two molecules of water, the removal of four electrons from water requires the absorption of four photons, one for each electron. Further, the design of a cell is an important parameter for the optimization in obtaining the product of the reaction. The addition of electrons, the use of magnetic fields, the addition of several compounds (organic or inorganic, ions, metals, drugs or medications) to the system that starts with melanin and water and the addition of electrolytes and optionally medicine and temperature management is important to control partial pressures of gases, the management of the electrical current, the application of magnetic fields, the level of pH, the material used in making the cells and the shape and disposition of its internal divisions, etc.. Apart from other variables, which are able to be controlled in such a way that the final design can recover electrons, or protons, or oxygen, and the resulting compounds according to the formulation of the medium in the melanin is dissolved. Thus, the melanins (pure or combined with organic compounds and inorganic compounds, metals) allow a notable flexibility of the design according to the goals to reach. The optimization of radiationelectrochemical and/or photoelectrochemical design relates to the objectives, for example for a higher generation of protons and oxygen or a generation and conserving of electricity; the largest possible area of exposition of the liquid compound to the emitter emitting electromagnetic radiation and to a light source in an extended container, apart from other procedures such as the addition of electrons carrier compounds, melanin doping, etc., as also positive microlens to concentrate the light to support photolysis alone or beside the radiosynthesis is advantageously.

Advantageously, the melanin, melanin precursors or melanin derivatives are contained in an aqueous solution absorbing energy obtained by an electromagnetic radiation, sound or light energy source as an inner or outer energy source. Preferably, melanin, melanin precursors or melanin derivatives are contained in the aqueous solution in concentration, i.e. 3, 5, 10, 40, 50 or 60% referred to the total volume of the aqueous solution with the melanin, melanin precursors or melanin derivatives.

Advantageously, melanin, melanin precursors or melanin derivatives are in the aqueous solution solely or mixed with other material to support aims. Moreover, two electrodes of variable nature, i.e. silver, gold, aluminium, copper, brass, etc. could be at least within the container or within the aqueous solution. Thereby melanin, melanin precursors or melanin derivatives dissociate water molecules by dissipating the absorbed energy, wherein high-energy electrons are transferred to a primary electron acceptor. Further, the melanin, melanin precursors or melanin derivatives are used for the reverse reaction that comprises the union of atoms of hydrogen and oxygen generating water molecules, at least an electric current or chemical energy. Preferably, the use of melanin is propound as the electrolyzer material of the water molecule, using for example electromagnetic radiation and/or light as main or sole energy source for the hydrogen production systems known as electromagnetic radiation and/or photoelectrochemical methods.

As aforementioned, these systems integrate a semiconducting material and a water electrolyzer inside a monolithic design to produce hydrogen atoms directly from water, using electromagnetic radiation and/or light as the main or sole source of energy, as well for example sound, ultrasound, in an interval of 0,5 to 3 MHz, preferably to 1 MHz. Further, a mechanical stir, magnetic fields, etc. can also be used. At least two basic criteria had to be met to find a material that could withstand the whole process: one criteria is the electromagnetic radiation and/or light absorbing system or compound that have to generate enough energy to start, lead and support completely the electrolysis reaction, and it had to be low cost, stable and long-lasting in a water environment. Melanins can reasonably and efficiently meet the above-mentioned requirements and this represents a progress to solve the central problem for example of electromagnetic radiation and/or photoelectrochemical designs. Inside the cell (molecule, container or motor) the main material, the essential solute, is preferably mainly dissolved in water and/or in nutrition solution. The basis of the design is the notable capacity of melanin to absorb for example the radiation from an inner electromagnetic radiation source or to absorb light for example from an outer energy source, that is outside the cell, probably by the surrounding portions of the cell, followed by the generation of high energy electrons from low energy electrons. These high energy electrons are transferred to the center of free radicals of the compounds where they are probably captured by an element for example: a metal such as iron, copper, gadolinium, europium, etc., from where they are transferred to a currently unknown primary electron acceptor because the union is complex and comprises ionic interactions depending on the pH. The electron transfer liberates energy, which is used to establish the proton gradient. In one advantageous embodiment of the cell, the aqueous solution including melanin, melanin precursors, melanin derivatives, or analogues is able to absorb the electromagnetic radiation and/or the light. However, in a particularly preferably embodiment of the invention, the aqueous solution including melanin, melanin precursors, melanin derivatives, or analogues is able to fully absorb the electromagnetic radiation and/or the light. This design of the cell with an aqueous solution including melanin that is able to fully absorb the electromagnetic radiation and/or the light in addition with a material that permits to pass through electromagnetic radiation increases the safety of the invented cell to a maximum.

It is another advantage that at least the electric current or the chemical energy is used as the external stimulus. Thereby electrolyzing water elements are absorbing electromagnetic radiation and/or light for generating an electric current. Further, the electric current can be transformed into thermal energy, wherein the thermal energy can be used as the external stimulus. That is that the chemical energy is transformed into thermal energy or that the thermal energy is received by exothermic chemical reaction.

In one specified embodiment of the invention, at least the electric current or the chemical energy is transformed into pressure.

Advantageously, the actuator is an artificial muscle. Artificial muscles are a generic term used for materials or devices that can reversibly contract, expand, or rotate within one component due to an external stimulus. The external stimulus can be among others voltage, current, pressure and/or temperature. There are three basic actuation responses, namely contraction, expansion, and rotation, which can be combined together within a single component to produce other types of motions e.g. bending, by contracting one side of the material while expanding the other side. Conventional motors and pneumatic linear or rotary actuators do not qualify as artificial muscles, because there is more than one component involved in the actuation. Due to their high flexibility, versatility and power-to-weight ratio compared with traditional rigid actuators, artificial muscles are highly disruptive emerging technology. Artificial muscles are able to generate a hundredfold increase in power over equivalent lengths of natural muscle fibers.

In one advantageous embodiment the artificial muscle is based on at least electroactive polymers (EAPs) that can be actuated at least through the application of the electric current in form of an electric field comprising piezoelectric polymers, with ionic EAPs comprising the advantages depending on the voltage polarity, a unique capability of bistability, requiring low voltage and electronic EAPs comprising the advantages of high mechanical energy density. Large actuation forces, can operate for a long time in room conditions, exhibit a rapid response (mSec), can hold strain under DC and/or AC activation, dielectric actuators (DEAs), electrostrictive graft elastomers, liquid crystal elastomers (LCE) or ferroelectric polymers, or Ionic EAPs that can be actuated at least through the chemical energy in form of a diffusion of ions in the aqueous solution, particularly in an electrolyte solution. In addition to the application of the electric current in form of the electric field or either alone, the artificial muscle is based at least on polyelectrode current in form of the electric field, comprising polyelectrode gels and ionic polymer gels (IPG), ionomeric polymer metallic composites (IPMC), conductive polymers (CP) and electrorheological fluids (ERF) or carbon nanotubes (CNT), or pneumatic artificial muscles (PAMs) that can be actuated at least through overpressure and/or underpressure operation, or shape-memory alloys (SMAs) that can be actuated at least through the application of thermal energy. EAPs are polymers that can be actuated through the application of electric fields.

Currently, the most prominent EAPs include piezoelectric polymers, dielectric actuators DEAs, electrostrictive graft elastomers, liquid crystal elastomers LCE and ferroelectric polymers. Ionic EAPs are polymers that can be actuated through the diffusion of ions in an electrolyte solution and/or in addition to the application of electric fields. Examples of ionic electroactive polymers include polyelectrode gels, IPMC, ERF. Further, PAMs operate by filling a pneumatic bladder with pressurized air. Upon applying gas pressure to the bladder, isotropic volume expansion occurs, but is confined by braided wires that encircle the bladder, translating the volume expansion to a linear contraction along the axis of the actuator. PAMs can be classified by their operation and design, namely PAMs feature pneumatic or hydraulic operation, overpressure or under pressure operation, braided/netted or embedded membranes and stretching membranes or rearranging membranes. Moreover, SMAs, liquid crystalline elastomers, and metallic alloys that can be deformed and then returned to their original shape when exposed to heat, can function as artificial muscles. Thermal actuator-based artificial muscles offer heat resistance, impact resistance, low density, high fatigue strength, and large force generation during shape changes. Therefore, electric field-activated, electrolyte-free artificial muscles called can be used, based on the thermal expansion of a secondary material within the muscle's conductive twisted structure. Moreover, a coiled vanadium dioxide ribbon can twist and untwist at a peak torsional speed of 200000 rpm. The three types of artificial muscles have different constraints that affect the type of control system they require for actuation. It is important to note, however, that control systems are often designed to meet the specifications of a given experiment, with some experiments calling for the combined use of a variety of different actuators or a hybrid control schema. Advantageously, EAPs offer lower weight, faster response, higher power density and quieter operation when compared to traditional actuators. Both electric and ionic EAPs are primarily actuated using feedback control loops, better known as closed-loop control systems. There are two types of pneumatic artificial muscles (PAMs). The first type has a single bladder surrounded by a braided sleeve and the second type has a double bladder. PAMs generally consist of rubber and plastic components. As these parts are exposed to each other during actuation, the PAMs temperature increases, ultimately leading to permanent changes in the structure of the artificial muscle over time. The double bladder actuator consists of an external membrane with an internal flexible membrane dividing the interior of the muscle into two portions. A tendon is secured to the membrane, and exits the muscle through a sleeve so that the tendon can contract into the muscle. A tube allows air into the internal bladder, which then rolls out into the external bladder. A key advantage of this type of pneumatic muscle is that there is no potentially fictive movement of the bladder against an outer sleeve. SMA artificial muscles, while lightweight and useful in applications that require large force and displacement, also present specific control challenges, namely SMA artificial muscles are limited by their hysteretic input-output relationships and bandwidth limitations. As for bandwidth limitations, the dynamic response of an SMA actuator during hysteretic phase transformations is very slow due to the amount of time required for the heat to transfer to the SMA artificial muscle. Artificial muscle technologies have wide potential applications in biomimetic machines, including robots, industrial actuators and powered exoskeletons. EAP-based artificial muscles offer a combination of lightweight, low power requirements, resilience and agility for locomotion and manipulation. Further fields of application are in aerospace, automotive industry, medicine, medicine products, robotics, articulation mechanisms, entertainment, animation, toys, clothing, haptic and tactile interfaces, noise control, transducers, power generators, and smart structures. Pneumatic artificial muscles also offer greater flexibility, controllability and lightness compared to conventional pneumatic cylinders. Thermal actuators such as SMAs have various military, medical, safety, and robotic applications, and could furthermore be used to generate energy through mechanical shape changes. Construction of mechanisms or devices that are actuated by EAP materials requires accurate and detailed information about the properties of the materials that are used. In order to assess the competitive capability of EAPs, there is a need for a performance matrix that consists of comparative performance data. Such a matrix needs to show the properties of EAP materials as compared to other classes of actuators, including piezoelectric ceramic, shape memory alloys, hydraulic actuators, and conventional motors. Studies are underway to define a unified matrix Artificial Muscles using Electroactive Polymers (EAP) and establish effective test capabilities. Test methods are being developed to allow measurements with minimum effect on the EAP material. While the electromechanical properties of electronic-type EAP materials can be addressed with some of the conventional test methods, which are used for example to test piezoelectric materials, the ionic-type EAPs (such as IPMC) are posing technical challenges. The response of these materials suffers complexities that are associated with the mobility of the caution on the microscopic level, strong dependence on the moisture content, and hysteretic behavior. The use of a video camera and image processing software offers an effective capability to study the deformation of IPMC strips under various mechanical loads. Simultaneously, the electrical properties and the response to electrical activation can be measured. Nonlinear behavior has been clearly identified in both the mechanical and electrical properties and efforts were made to model this behavior.

Furthermore, the actuator can be formed advantageously of muscle tissue (human or animal, preferably mammalians), particularly of actin and myosin, wherein the muscle tissue is formed and arranged in such a manner that it contracts in response to the external stimulus if the external stimulus increases to a certain threshold, and that the muscle tissue relaxes if the external stimulus decreases to a certain threshold. Myosins comprise a family of ATP-dependent motor proteins and are best known for their role in muscle contraction and their involvement in a wide range of other eukaryotic motility processes. They are responsible for actin-based motility. Actin is a globular multi-functional protein that forms microfilaments. It is found in all eukaryotic cells where it may be present at concentrations of over 100 µM. An actin protein's mass is roughly 42 kDa and it is the monomeric subunit of two types of filaments in cells: microfilaments, one of the three major components of the cytoskeleton, and thin filaments, part of the contractile apparatus in muscle cells. Either it can be present as a free monomer called G-actin (globular) or as part of a linear polymer microfilament called F-actin (filamentous) both of which are essential for such important cellular functions as the mobility and contraction of cells during cell division. Actin participates in many important cellular processes, including muscle contraction, cell motility, cell division and cytokinesis, vesicle and organelle movement, cell signaling, and the establishment and maintenance of cell junctions and cell shape. Many of these processes are mediated by extensive and intimate interactions of actin with cellular membranes. It can also produce movement either by itself or with the help of molecular motors.

Advantageously, the melanin, melanin precursors or melanin derivatives, the actuator and the aqueous and/or nutrition solution are located within a container or a cell. Being one of the main requirements, to be transparent, in order to permit the light to pass through and depending on the wavelength of the illumination that is going to be used, the walls could be made of quartz, for example, so that the walls of the container do not absorb the ultraviolet radiations, or if a specific wavelength is determined, the material of which the container is made could be of a color that allow maximum transparency or absorption of the wavelength from the electromechanical spectrum, but to prohibit the pass through of the electromagnetic radiation. The walls could be made of plastic for example with a special lead alloy, so that the walls of the container do not emit radiations by the emitting energy source.

The material of which the container is made could be of a color that allow maximum transparency or absorption of the wavelength from the electromechanical spectrum, so that beside the inner energy source within the container an outer energy source preferably light, to produce protons in the photolysis, can be used. The walls can be made of glass or of any other polymer whose permeability characteristics of the electromagnetic radiations and/or the photoelectrochemical process fit to the final needs of the electromagnetic radiation and/or holoelectrochemical design, so that no radiation escapes but light can be absorbed. The wavelengths that can be used to energize the design comprise the whole spectrum of light, particularly from 200 nm to 900 nm. In general melanin is able to absorb any type of energy, including the electromagnetic spectrum in its entirety and dissipate it through the dissociation of the water molecule.

The design (shape) of the container is not limited and can have a spherical, cubic, rhomboidal, polyhedric, plain concave, plain convex, biconvex, biconcave shape with microlens in a side (the side exposed to light to concentrate it) and flat on the other side cylindrical, circular cylindrical, hollow cylindrical, circular cone (straight) truncated cone, rectangular prism, oblique prism, rectangular pyramid, straight truncated pyramid, truncated spherical segment, spherical segmented, spherical sector, spherical with cylindrical perforation, sphere with conic perforations, torus (circular section ring), cylinder with slanted cut, cylindrical wedge, semi prism barrel, and combinations of them, etc., because the liquid assumes any shape, depending of the kind of melanin used (doped or not, for example), it will be convenient to select a specific irradiation, preferably gamma irradiation to the soluble melanin, but until this moment one of the big virtues of soluble synthetic melanin is that it absorbs the majority of the radiation emitted by the emitting source. The control of the partial pressures of the gases in the interior of the cell is an important variable, and it depends on the cell shape and given use. This pressure can range from 0.1 mm/Hg until 3 or 4 atmospheres. Another variable that must be taken into account is the concentration of different substances dissolved in the liquid, where the critical concentration is mainly of melanin and can range from 0.1% to 100%. Another variable is the ratio among the different components of the formula (depending on the use) that can be modified also, because potassium can be added in a concentration from 0.1 to 10%, sodium in a concentration from 0.1 to 10%, Chlorine in a concentration from 0.1 to 10%, calcium in a concentration from 0.1 to 10%, iron in a concentration from 0.1 to 8%, copper in a concentration from 0.1 to 5%, arsenic in a concentration from 0.1 to 8 or 9%, gold in a concentration 0.1 to 8 or 9%, silver in a concentration similar to gold, nickel in a concentration from 0.1 to 8%, gadolinium, europium, erbium, etc.. The final volume can range from 1 µl to 20 I, up to a maximum of 1000 l depending on the size of the container and the available space. The temperature can fluctuate from 2°C to 45°C, especially from 45°C to 150°C and in most advantage from 200°C to 500°C. The frequency of change of solution can range from every 15 min to several months or 2 to 3 years. The formation of compartments inside the cell, in the interior of the cell shapes ranging from small spheres (microspheres, there can be several dozens of them) to spheres with the size of which could be included 3 or 4 times inside the whole design, and in the shape of the interior of the cell cubic rhombic, polyhedral, concave plane, convex plane, biconvex, biconcave with microcells, biconvex on one side (the side exposed to light to concentrate it) and flat on the other side, cylindrical, circular cylindrical, hollow cylindrical, circular cone (straight), truncated cone, rectangular prism (straight), oblique prism, rectangular pyramid (straight), truncated pyramid, truncated spherical segment, spherical segment, spherical sector, spherical with cylindrical perforation, sphere with conic perforations, toro (circular section ring), cylinder with slanted cut, cylindrical wedge, barrel, semiprism, can be used including combinations of these, the power of the optionally microlens can range from 0.1 to 100 diopters, the redox properties of the materials used in the formation of the compartments (iron, silver, copper, nickel, gold, platinum, gallium arsenide, silicon, gadolinium, europium, erbium, praseodymium, dysprosium, holmium, chromium, magnesium, lead selenide and alloys of them, etc.).

It is further an advantage that at least the actuator or melanin, melanin precursors or melanin derivatives are in a nutrition solution within the container, wherein the nutrient solution at least partially replaces the aqueous solution. A nutrition solution or culture medium is a liquid or gel designed to support the growth of microorganisms or cells. There are different types of media for growing different types of cells. There are two major types of growth media, those used for cell culture, which use specific cell types derived from plants or animals, and microbiological culture, which are used for growing microorganisms, such as bacteria or yeast. An undefined medium is a medium that contains a carbon source such as glucose for bacterial growth, water, various salts needed for bacterial growth, a source of amino acids and nitrogen (e.g. beef, yeast extract). This is an undefined medium because the amino acid source contains a variety of compounds with the exact composition being unknown. Minimal media are those that contain the minimum nutrients possible for colony growth, generally without the presence of amino acids. Minimal medium typically contains a carbon source for bacterial growth, which may be a sugar such as glucose, or a less energy-rich source like succinate various salts, which may vary among bacteria species and growing conditions, these generally provide essential elements such as magnesium, nitrogen, phosphorus, and sulfur to allow the bacteria to synthesize protein and nucleic acid and water. Advantageously, at least the aqueous solution or the nutrient solution comprises electrolytes.

Furthermore, the electromagnetic energy source is an emitter, particularly emitter particles, within the nutrition solution or the aqueous solution. The use of cathodes and anodes, their material (for example platinum, iron, silver, gold, steel, aluminum, nickel, arsenium, gadolinium, europium, erbium, praseodymium, dysprosium, holmium, chromo, magnesium; gallium), depending on the optimal characteristics to recover electrons or hydrogen. Another variable is initial pH of the solution that can range from 2 or 3 to 8 or 9 units of pH, being the most used about 7. The above-mentioned variables that can be handled in order to control the photoelectrolysis process depending on the needs of the project in question. The core of any efficient radiation-electrochemical designs are the melanins or melanin variants, water-soluble, where they catalyze the radiosynthesis or the photolysis process, without undergoing significant changes except the presence of elements such as magnesium, iron, copper, lead, and others, the resulting products of which together with the resulting products of the partial reduction of the oxygen atom (superoxide anion, hydroxyl radical, hydrogen peroxide, quinones and orthoquinones), can fast or slowly damage the effectiveness of melanin, but in case of pure melanin, at a 10% concentration, for example, the duration of the compound is long enough to be economically convenient (approx. years), and the synthesis of melanin is a very efficient process. Thus, from an economic and ecological point of view it is very viable, because pure melanin is fully biodegradable. Thus, the cell only requires, beside the solid electromagnetic radiation source, a periodic supply of distillated water, as well as a periodic replacement of soluble melanin, or eventually, the renewal of substances added to the design to optimize or potentiate some of the processes occurring as a result of exposing the radiation-electrochemical design to the irradiation and/or the photoelectrochemical design to the light. The ecological advantage of the final products of the reaction being water molecules, oxygen molecules or atoms, hydrogen, high energy electrons, and electrical current can be easily realized. There is little generation of greenhouse effect due to CO₂ molecules. The transfer of electrons releases energy, which is used to establish a proton gradient. The proton movement during the electrons transportation can be compensated by the movement of other ions, advantageously using membrane and a solvent with adequate solutes, membrane potential can be formed from photons captured by mean of melanin. Melanins, melanin precursors, melanin derivatives and variants, oxidize the water molecule to O, O₂, and H₂, absorbing energy obtained for example by the electromagnetic/ionizing radiation (electrons) and/or the light (photons) as the inner or outer energy source, and reduce oxygen atoms with hydrogen atoms to H₂O, liberating energy (electricity, although it can "keep" or "conserve" the electricity, i.e. it can function as a battery or accumulator, i.e. not only generating energy but also keeping it for a while and within some limits). That is why the cell design can be adapted to the requirements. H₂ and O₂ atoms are produced e.g. with irradiation by electromagnetic radiation and/or with light, but the generation of these elements can be increased by melanin doping with metals or adding organic and inorganic molecules, also modifying the electrolyte concentrations, adding drugs or controlling the characteristics of e.g. irradiation and/or of light, over the liquid containing water and melanins (melanin) and in case of light, for example with a design based on microlens to condensate or selecting determinate wavelength, using coherent or disperse, monochromatic, polychromatic, continuous, discontinuous, natural, artificial, light etc.. The radiation-electrochemical reactions and/or the photoelectrochemical reactions occur in two ways, i.e. the water molecule is separated but also formed, so it can recover electric current of the design and it can also be optimized through melanin doping with different substances (drugs, metals, electrolytes, organic and inorganic molecules, and others) or by light concentration by mean of lens, among others. The container, cell or box containing the liquid can have different shapes that adapt to different needs, in the house roofs, car roofs, plants buildings, industrial processes, etc. cells connected among them, but the central component of the design is melanin (water soluble melanins), that induces and carries out for examples the radiosynthesis in the manner as for example the photolysis of the water molecule and/or the photolysis of the water molecule, in presence of electromagnetic radiation and/or of light. The melanins remove electrons from water and generate a gradient of protons. The electromagnetic radiation and/or the light depending reactions can also generate energy to reduce CO₂ to CH₂O, nitrates to ammonia and sulphates to sulphydriles.

Advantageously, an inner energy source emitting electromagnetic/ionizing radiation is an emitter that is within the aqueous solution or the nutrient solution or that is separated within the container from the aqueous solution or the nutrient solution, maybe by incorporating the inner energy source in a container that is surrounded by the aqueous solution, so that the emitter is not in contact with the aqueous solution or the nutrient solution, directly. However, in another preferred embodiment of the invention, the emitter could be within the aqueous solution or the nutrient solution, preferably as particles. This embodiment of emitter particles in the aqueous solution or in the nutrient solution has the advantage, that the emitter is fairly equally distributed in the aqueous solution or in the nutrient solution. In one preferred embodiment of the invention, the substances as for the emitter and/or as for the particles are preferably from enriched reprocessed substances, for example enriched reprocessed uranium (ERU) and mixed oxide (MOX). Thus, the invention can be seen as a development of a new beneficiation method or as a recycling concept for sustainable utilization of secondary raw materials, which are difficult to dispose. As already mentioned above the temperature of the aqueous solution within the container is from 2°C to 500°C, wherein the temperature can be used to control the amount of energy from the energy source. However, in one particularly preferably embodiment of the invented process the temperature of the aqueous solution within the container is from 350°C to 500°C, preferably close to 500°C. Therefore, it needs to design the container with a material that is heat resistant. One special embodiment of the invention is a cell, for example a battery or an accumulator, for generating an electric current. For using the cell as for the invented process, especially to incorporate the emitter as an inner energy source emitting electromagnetic radiation and the aqueous solution or the nutrient solution, the cell comprises a container that is preferably made of a material permitting at least electromagnetic radiations to pass through. Moreover, the material as for the container is preferably heat resistant especially at least until 500°C, so that the invented process may be performed with temperatures until 500°C or preferably close to 500°C. In the aqueous solution or in the nutrient solution within the container of the cell melanin, its precursors, variants, derivatives, or synthetic or natural analogues, are preferably dissolved. As for the connection of the cell to a consumer, that could be a motor device according to the present invention the cell preferably comprises a cathode and an anode. It is an advantage that the emitter, particularly the emitter particles, are from, but are not limited to at least one of the following substances: titanium-44, Uranium 232, plutonium-238, nickel-63, silicon-32, argon-39, californium-249, silver-108, americium-241. Niobium-91, carbon-14, curium-245, niobium-94, plutonium-239, nickel-59, neptunium-236, uranium-233, technetium-99, uranium-234, chlorine-36, curium-248, aluminum-26, beryllium-10, zirconium-93, technetium-97, manganese-53, technetium-98, palladium-107, curium-247, uranium-236, niobium-92, plutonium-244, samarium-235, potassium-40, uranium-238, thorium-232, lutetium-176, rhenium-187, rubidium-87, lanthanum-138, samarium-147, platinum-190, barium-130, gadolinium-152, indium-115, hafnium-174, osmium-186, neodymium-144, samarium-148, cadmium-113, vanadium-50, tungsten-180, molybdenum-100, bismuth-209, zirconium-96, cadmium-116, selenium-82, tellurium-130, germanium-76, xenon-136, neodymium-150, calcium-48, cobalt-60 or tellurium 128. The emitter and/or the emitter particles can also be a combination of at least two of the aforementioned substances, and could be preferably in form of mixed oxides. Advantageously, the emitted particles are captured by the melanin, wherein melanin dissipates them separating the water molecule.

Advantageously, light is used as the inner or outer energy source, particularly natural or synthetic light, coherent or not, monochromatic or polychromatic light with a wavelength mainly between 200 nm and 900 nm, preferably 390 nm and 750 nm, or invisible light, particularly ultraviolet light with a wavelength at least between 380 nm and 315 nm (UV-A), or between 315 nm and 280 nm (UV-B), or between 280 nm and 200 nm (UV-C-FUV), or between 200 nm and 100 nm (UV-C-VUV) or with a wavelength between 121 nm and 10 nm or (EUV), or infrared light with a wavelength at least between 780 nm and 1400 nm (NIR), or between 1,4 µm and 3,0 µm (SWIR), or between 3,0 µm and 8 µm (MWIR), or between 8 µm and 15 µm (LWIR), or a wavelength between 15 µm and 1 mm (FIR).

In one advantageous embodiment of the invention sound is used as the inner or outer energy source, particularly ultrasound, in an interval of 20 kHz to 1 GHz, sound in an interval of 1 MHz, mechanical stir or magnetic fields. Sound is a type of energy that melanin is able to absorb and to dissipate it by dissociation and reformation of water, for example. Through dissociation and reformation of the water molecule voltage is produced.

Advantageously, the melanin, melanin precursors or melanin derivatives comprises at least one of the following: polihydroxyindole, eumelanin, feomelanin, alomelanin, neuromelanin, humic acid, fulerens, graphite, polyindolequinones, acetylene black, pyrrole black, indole black, benzene black, thiophene black, aniline black, poliquinones in hydrated form sepiomelanins, dopa black, dopamine black, adrenalin black, catechol black, 4-amine catechol black, in simple linear chain, aliphatics or aromatics; or their precursors as phenoles, aminophenols, or diphenols, indole poliphenols, ciclodopa DHIY DHICA1, quinones, semiquinones or hydroquinones, L-tyrosine, L-dopamine, morpholin, ortho benzoquinone, dimorpholin, porphirin black, pterin black, ommochrome black, free nitrogen precursors, any of the above listed with any size or particles from 1 angstrom to 4 cm. Preferably, the invention consists essentially in obtaining under normal temperature until to 500°C, and using electromagnetic radiation, as the only source of energy or beside light as a second energy source or as the only source of energy, the division of water molecule to obtain hydrogen and oxygen atoms as well as electrons of high energy or join hydrogen or oxygen atoms to obtain water and electric current; using as main or central electrolyzing melanins at least one of the following: polihydroxyindole, eumelanin, feomelanin, alomelanin, neuromelanin, humic acid, fulerens, graphite, polyindolequinones, acetylene black, pyrrole black, indole black, benzene black, thiophene black, aniline black, poliquinones in hydrated form sepiomelanins, dopa black, dopamine black, adrenalin black, catechol black, 4-amine catechol black, in simple linear chain, aliphatics or aromatics; or their precursors as phenoles, aminophenols, or diphenols, indole poliphenols, ciclodopa DHIY DHICA1, quinones, semiquinones or hydroquinones. L-tyrosine, L-dopamine, morpholin, ortho benzoquinone, dimorpholin, porphirin black, pterin black, ommochrome black, free nitrogen precursors, any of the above listed with any size or particles. (from 1 angstrom to 3 or 4 cm). All aforementioned compounds are preferably electroactive, in suspension, solution, in gel, that absorb the ultrasound in the interval of one MHz, natural or synthetic, with vegetal, animal or mineral origin; pure or mixed with organic or inorganic compounds, ions, metals, (gadolinium, iron, nickel, copper, erbium, europium, praseodymium, dysprosium, holmium, chromium or magnesium, lead selenure, etc.). In this connection gadolinium is a very effective metal. The metal is incorporated into the melanin in ionic form or as a particle, as well as drugs or medication energizing the electrochemical and/or the photoelectrochemical design with electromagnetic radiation and/or light (natural or synthetic), though other energy types, for example, the kinetic, also are efficient in various grades, according to the rest of the conditions (pH, temperature, pressure, etc.). To this kind of designs magnetic fields from soft to significant intensity can be applied in addition.

It is a further advantage that the energy supplied by melanin, melanin precursors or melanin derivatives as the energy source is transformed into kinetic energy. Advantageously, the kinetic energy is transformed into a rotary movement. Kinetic energy of an object is the energy that it possesses due to its motion. It is defined as the work needed to accelerate a body of a given mass from rest to its stated velocity. Having gained this energy during its acceleration, the body maintains this kinetic energy unless its speed changes. The same amount of work is done by the body in decelerating from its current speed to a state of rest.

Preferably, the electric current, particularly high energy electrons, that is provided by using melanin, melanin precursors or melanin derivatives as the electrolyzer material - that means as the energy source - by absorbing for example light or electromagnetic radiation - as an inner or outer energy source - is transformed into movement, wherein the energy coming from melanin, especially the electrons and the chemical energy, particularly in form of diatomic hydrogen, is used as the external stimulus that elicited an elongation response from actuator, and when this energy coming from melanin is diminished the actuator will show a reduction in its longest diameter. In contrast to an electric source, for example a battery or another voltage source, that is outside the aqueous solution to supply an electric current into the aqueous solution, the electric source of the present invention is advantageously in the aqueous solution within the motor device, so that the stimulation of a muscle within the aqueous solution or within the nutrient solution of the motor device is not only by the electric current but beside the electric current by the chemical energy, particularly in form of diatomic hydrogen.

In another aspect of the invention a method for the actuation of a motor device, which is arranged to be actuated in response to an external stimulus comprising at least one actuator and at least one energy source, uses melanin, melanin precursors or melanin derivatives providing energy as the energy source. Advantageously the motor device is configured according to the previous embodiments.

Thus, motor device according to the present invention is based preferably in melanin and the way muscles move, advantageously. Therefore, it is intend for many applications that require movement, for example for the movement of a car, particularly when the motor device will be constituted by several small motors, fractal like.

Within the small motors the smallest parts of the muscle (actuator), that is comprised by the motor device, are molecules that are elongated when energy levels are high, and when energy levels are lowered (by some of the physiological mechanism body has) the molecules contract. This explains why animals when hibernating show stiff muscles, almost like stones, because are in a low energy level and thereby contracted, that is congruous with low light energy level and cold; factors that turn down human photosynthesis.

The motor device of the present invention works under the same principle, with high energy levels (from melanin) the smallest part will be elongated and when voltage is diminished the fiber will be contracted. This movement (elongation/contraction) can be transmitted to a wheel and can be repeated enough times by minute in order to get significant movement.

The present invention is further described in detail with respect to the accompanying material and methods and the drawings. Features discussed within the material and methods and in the description of the drawings can be freely combined with each other. The features mentioned in the claims and the specification are essential to the invention, either in themselves or in any given combination.

### EXAMPLES

### Materials and Methods

In general melanin for the present purpose can be synthesized artificially in all known other ways.

Especially, Eumelanin produced by the fungus Cryptococcus neoformans grown in presence of L-DOPA melanin precursor was used. The growth of melanized cells was followed by acid hydrolysis resulting in production of hollow melanin shells dubbed "ghosts" (as they preserve the shape of the cell) was performed.

A carbon paste (CP) electrode was utilized, for studying melanin electrochemistry. Dry melanin ghosts were crushed lightly to a powder with a clean glass rod and mixed by weight with CP (Bioanalytical Systems, BAS, West Lafayette, IN) at melanin/CP ratios of 10:90, 20:80 and 30:70. The melanin/CP mixtures were packed into electrode housings (BAS). The packed electrodes were stored in sterile, pH 7, 50 mM/L, phosphate buffered saline (PBS) at 25°C for at least one week to allow the melanin to hydrate. Since fungi are known to produce extracellular reductants, the method was performed in the presence and absence of a reductant, in order to gain a better understanding of the potential role of extracellular reductants on the long-term radioprotective properties of melanin. When used as a reductant, 1 mM/I ascorbate (final concentration) was incorporated with PBS and electrodes were exposed to this solution for at least 24 hrs to allow ascorbate to diffuse into the electrode material. Cyclic voltammetry was used to confirm that sufficient ascorbate was in contact with the electrode material by demonstrating reduced conditions.

Electrochemical measurements were performed in a three-electrode geometry with a CP or melanin/CP working electrode, a Pt counter electrode (BAS) and a Ag/AgCl, 3M NaCl reference (BAS), all immersed in 50 mM/L, pH7.0, PBS with or without 1mM/L ascorbate. Electrodes were contained in glass vials fitted with screw on caps and teflon septa at either end of the vial. Electrodes were positioned via holes in the septa. The working electrodes were positioned facing up to prevent gas bubble accumulation on their surface.

Electrochemical analyses were conducted on a VersaSTAT MC Multichannel Potentiostat/Galvanostat (Princeton Applied Research) employing two channels simultaneously. For gamma irradiation studies, the cables from the potentiostat were run through access ports of a 25 cm × 25 cm × 100 cm chamber (J. L. Shepherd Model 484). Vials with electrodes were positioned in a stainless steel rack and attached to leads from the potentiostat. Dose rate was determined by distance of the electrodes from a ⁶⁰Co gamma source inside the chamber for each experiment. For some experiments that required a high current response to aid in quantification, racks were designed to fit as close as possible to the gamma source for maximum radiation dose.

Chronoamperometry was performed with electrodes poised at -700 mV and irradiation began after electrode current stabilized. Current production because of gamma irradiation was determined by the difference in current from the start of irradiation and at 60 and 90 min. Chronopotentiometry was conducted with electrodes poised at 1 mA. Cyclic voltammetry was conducted at a sweep rate of 100 m V/s from -1 V to 1 V for multiple cycles. Cyclic voltammograms were recorded prior to and throughout irradiation. Selected voltammograms were used to illustrate changes because of ionizing radiation exposure. All experiments were repeated 2 to 3 times.

As for the photolysis effect of melanin small scale experiments were conducted. Once these properties of melanins are inferred according the structure activity relation, soluble synthetic melanin is placed in water, forming a 1% solution in five 20 mL transparent, high density polythene flasks, at room temperature. The pH was measured before and after lighting during 30 min with visible light of a natural source (sun). Measuring the pH, an average decrease of two decimals of unit of pH (from 7.3 to 7.1) was obtained, which is considered as significant because melanins have buffering properties per se, so the change has to be larger, but is hidden by melanin intrinsic buffering properties. Thus, only a part of this pH-modification was detected, a change of pH in the magnitude of which is related to the biological system, because if it were greater, it would probably severely destroy or damage the cell, but a change of this magnitude is sufficient to induce biological changes that involve said extraordinary compound. To determine the biological magnitude of a decrease of 0.2 units of pH, in the case of blood, this reduction increases the calcium concentration to more than 10%.

Besides, the total blood pH ranges from 7.38 to 7.44, the arterial blood pH ranges from 7.36 to 7.41, and the vein blood pH ranges from 7.37 to 7.45, i.e., the variations are within a very narrow margin, and thus a difference of two decimals of unit of pH is really significant in a biological system.

In an initially close design the liberation of hydrogen in function of electric current generation was estimated, and obtained 50 mV on average and 110 mV between each peak, corresponding to about one to two units of pH, what is equivalent to the production of 1×10⁻⁷ mol/liter of hydrogen per each pH unit, because the molecular weight of hydrogen indicates that a mol of it is equal to a gram of hydrogen.

On the other hand, the melanocyte, is the cell showing most affinity for calcium in the organism, showing an affinity one thousand times higher than the bone, because although the latter has a larger quantity, it is only deposited in mineral form.

It is to be noted that this change from 0.2 to 1.0 units of pH, as well as its reversion when they were placed in flasks in a dark place, was foreseen by the theoretical system. The solutions of melanin used in the experiments has been prepared for at least 3 years and were not doped. As pointed out by the theoretical system, it is a very long lasting compound, very stable in water, that does not require preservatives, or refrigeration and it is not contaminated with microorganisms despite the age of the preparation, and these solutions only need to be kept in a fresh and dry place.

Therefore, this experiment demonstrates that melanin does not require preservatives and its electrolyzing properties are maintained despite the time (3 years after being synthesized).

The present invention is further described in detail with respect to the accompanying drawings. Features discussed within the description of the drawings can be combined with each other freely. The features mentioned in the claims and the specification are essential to the invention, either in themselves or in any given combination. There are shown:
Fig. 1 functional principle of an actuator in the form of a muscle in a schematic viewing,
Fig. 2 functional principle of the actuator from figure 1 transformed in translational movement,
Fig. 3 a schematic gearbox for transforming the translational movement from figure 2 into rotational movement,
Fig.4 functional principle of muscle tissue stimulated by an electric current and chemical energy as the external stimuli, A) in a relaxed status and B) in a contracted status and
Fig. 5 functional principle of an embodiment of a motor device according to the present invention.

In the different figures same features always correspond to the same reference signs, therefore generally, the features are only described once.

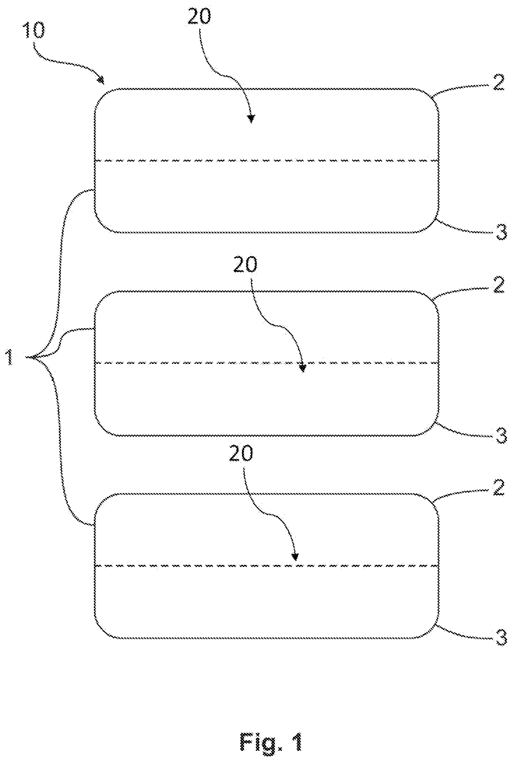

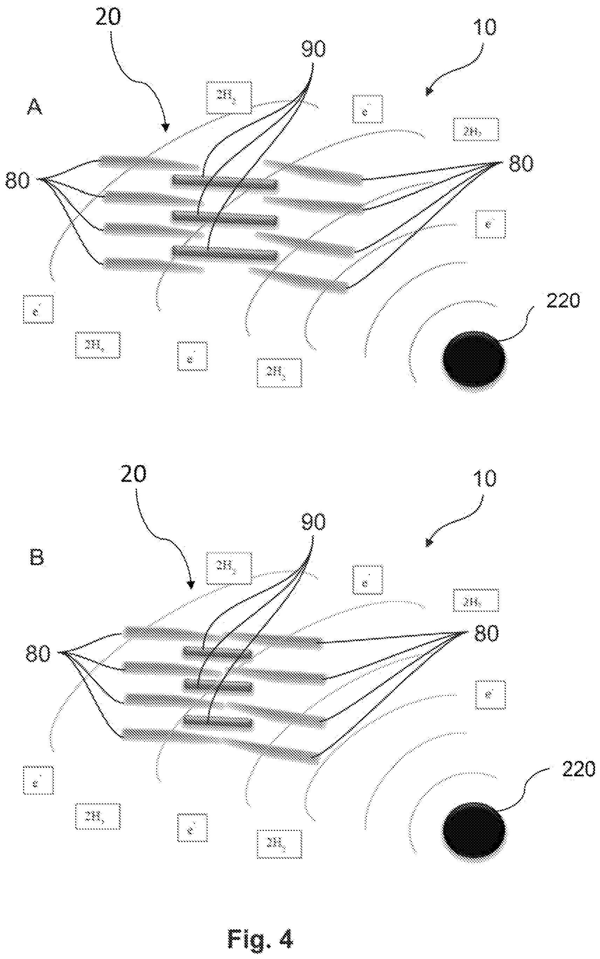

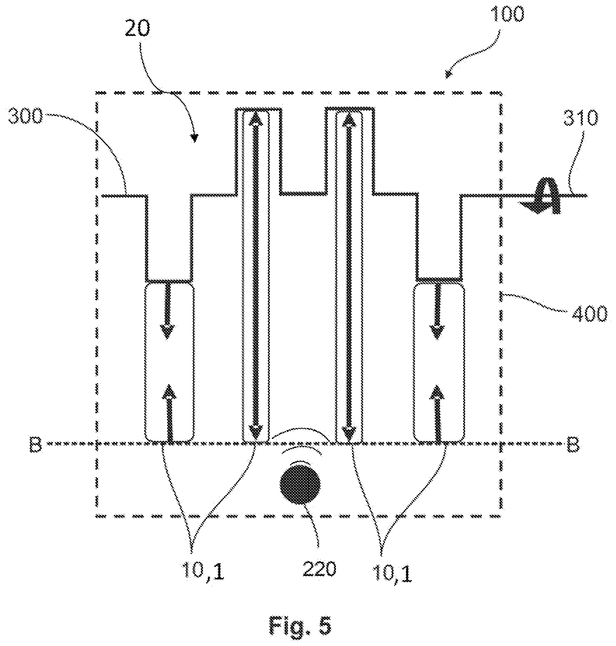

Figure 1 shows the functional principle of an actuator 10 which is formed of a muscle (muscle actuator) in a schematic viewing. The smallest molecules 1 from the actuator 10 are like magnets having a positive pole 2 and a negative pole 3, wherein the positive pole 2 and the negative pole 3 opposites attract each other as shown in the figure and similar poles 2 and 2 or 3 and 3 repel each other. The lowest level of energy of the actuator 10 is when the positive pole 2 and the negative pole 3 are joined one to another through the attraction of opposites. Thus, to keep the small molecules 1 of the actuator 10 within the attraction area of the opposite pole of the contiguous molecules 1 it is necessary to apply a force, a power that carries out such work. The amount of energy must be adequate so that the molecules 1 will not get out of the area of influence of the next molecule 1. Thus, when the molecules 1 are separated, the system has a high energy level. Inside the actuator 10, that is formed of a muscle, energy is generated from the melanin, melanin precursors or melanin derivatives within the muscle as energy source 20 providing energy, as shown in figure 4 A and B. In the motor device 100 as shown in figure 5 energy is generated by melanin, melanin precursors or melanin derivatives as energy source 20 providing energy.

When the chemical energy levels from melanin (in the form of hydrogen diatomic and high-energy electrons, in the muscle actuator 10) decrease, the system is dominated by the attractions of the magnetic molecules 1. This can be seen by a change in the consistency of the muscle and the contract of the muscle, wherein the muscle reduces its length.

In the case of the motor device 100 the energy comes from only high-energy electrons, wherein a usual battery of melanin provides up to 600 mV. Therefore, with melanin as the energy source inside the aqueous solution within the motor or within a container in addition to the motor it can arise from a level of energy in that range, preferably between 300 and 600 mV (molecules 1 are separated). However, if the voltage decreases below a certain level, the molecules (muscle) of which the motor device 100 could be made according to the invention would tend to join.

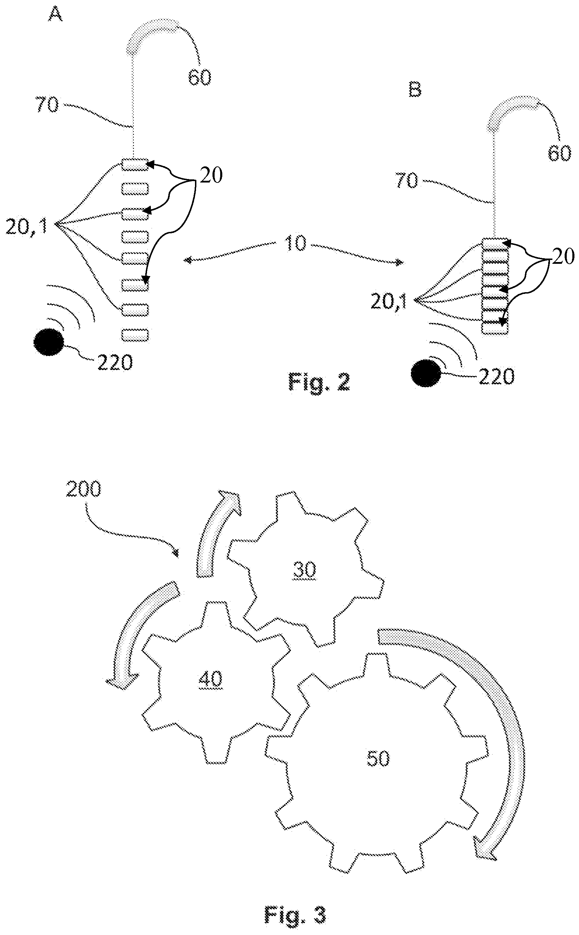

Figure 2 A and B shows the functional principle of the actuator 10 from figure 1, that is preferably a muscle, transformed in translational movement. In case basal chemical energy or common, coming into the actuator 10 from the energy source 20, for example from melanin, which absorbs energy from an energy source outside the muscle (outer energy source 220, for example light or sound), the actuator 10 is restored to its basal levels, then the attractive forces are exceeded by the present chemical energy, so that the molecules repel each other, see figure 2A.

Figure 2B shows muscle shrinkage, wherein the molecules 1 move towards one another because the force that kept them separate is reduced, wherein the attractive forces exceed the chemical energy.

The main characteristic of the motor with the muscle is, that the muscle shrinks when low energy is present and that it stretches when the energy increases. The resulting movement of the actuator 10, which essentially is shortening and lengthening the muscle, can be magnified by a cogwheel 30 und 40 of a gearbox 200, shown in figure 3, for example as shown via a hook 60 that is connected via a connection 70 with the actuator 10, and especially via the top molecule 1 of the muscle cord. Because the hook 60 is pivoted about an axis (not shown in the figure) it is able to move up and down along with the muscle shrinkage and by restoring the muscle to its basal level the up and down movement of the muscle is transformed into a rotary movement of a cogwheel 50. Since the forces of attraction of molecules to be used would have to be suitable for voltages produced by melanin, it is foreseeable that the initial designs are small, in order to move a sprocket multiple similar motor devices 100 have to be combined.

Figure 3 shows a schematic gearbox 200 for transforming the translational movement from figure 2 into a rotational movement, wherein the movement of the muscle, that is the actuator 10, is transmitted over the hook 60 to the cogwheels 30 and 40. Advantageously, the hook 60 is preferably pivoted self-resetting, so when the muscle shrinks, the hook 60 is moved down, wherein the cogwheel 40 is turned in one direction, as shown contra clockwise, and when the molecules 1 attract each other, the hook 60 is moved up, wherein the cogwheel 30 is turned clockwise. Because the cogwheel 30 and the cogwheel 40 work as part of a coherent whole by interlinking cogs in each other, and wherein only the cogwheel 40 meshes with the cogwheel 50, the cogwheel 50 is driven in only one direction, namely clockwise, as shown in figure 3. Therefore, the translational up and down movement, that means the translational movement in two directions, is transformed via the gearbox 200 into rotational movement of the cogwheel 50 in only one direction. Obviously, the rotational movement of the cogwheel 50 can be turned in the other direction, namely also contra clockwise.

Figure 4 shows an actuator 10 which is formed of muscle tissue, preferably in form of a molecule 1 shown in figures 1 and 2, particularly of myosin 80 and actin 90 filaments comprising melanin as a source of energy 20 providing 2H₂ and e⁻ by absorbing energy obtained by an electromagnetic radiation, sound or light as an outer energy source 220.

Figure 4 A shows the actuator 10 in a relaxed state. The myosin 80 and actin filaments 90 are not in interaction. In this state, no energy is absorbed. Figure 4 B shows the actuator 10 in a contracted state. The myosin 80 and actin filaments 90 are in interaction. In this state, the absolute length of the actuator 10 decreases to a certain extent of the normal length depending on the amount of energy, which is provided. A stimulus acts on the actin 90, modulating the myosin 80. Thereby an allosteric change in the actin 90 allows the myosin 80 to move. Myosin 80 binds to a newly uncovered binding site on the actin 90. Myosin 80 is now bound to actin 90 in the strong binding state. The actuator 10 is contracted.

Figure 5 shows a motor device 100 in a schematic viewing, wherein four actuators 10 in form of muscle molecules 1 are linked to a crankshaft 300. The crankshaft 300, the actuators 10, an energy source 20, that is preferably melanin, melanin precursors, melanin derivatives or analogues, dissolved in an aqueous and/or nutrition solution and an inner energy source 220 are within a container 400 in the form of an engine block (shown with a broken line in the figure). The lower parts of the actuators 10 are fixed within the container to a fixed position along the line BB. The upper part of the actuators 10 is fixed to the crankshaft 300. In figure 5 the two outer actuators 10 are in the contracted state and the two intermediate actuators 10 are in the relaxed state. Because of the alternating shrinkage and the elongation of the actuators 10, wherein the shrinkage is in the contracted state, the crankshaft 300 is turned. The turning of the crankshaft 300 can be translated via the part 310 of the crankshaft 300 to a wheel, for example. This means, if the actuator 10 is formed of muscle tissue, particularly of actin 80 and myosin 90, wherein the muscle tissue is formed and arranged so that it contracts in response to the external stimulus from the energy source 20, if the external stimulus increases to a certain threshold. If the external stimulus decreases to a certain threshold the muscle tissue relaxes. Therefore, translational movement of the actuators 10 can be translated in rotational movement (shown with the curved arrow at the part 310) via the crankshaft 300. If the actuators 10 are in form of muscles and if the energy source 20 is melanin dissolved in an aqueous solution, preferably in a nutrient solution, they are all within the container 400. In case the actuators are artificial muscles the energy source 20 is dissolved within the aqueous and/ nutrition solution, as shown in figure 5. However, in case the actuators are muscles the energy source 20 can be located within the muscle tissue, preferably within the aqueous and/or nutrition solution.

The previously mentioned discussion of the different embodiments is only carried out by the way of example and does not limit the scope of protection of the present invention.

## Claims

1. Motor device (100) that is arranged to be actuated in response to an external stimulus comprising at least one actuator (10) and at least one energy source (20), wherein the energy source (20) supplies the external stimulus,
**characterized in that** the actuator (10) is an artificial muscle, wherein the energy source (20) is melanin, melanin precursors or melanin derivatives providing energy.

2. Motor device (100) according to claim 1,
**characterized in that** melanin, melanin precursors or melanin derivatives are contained in an aqueous solution absorbing energy obtained by an electromagnetic radiation, sound or light as an inner or outer energy source (220), wherein melanin, melanin precursors or melanin derivatives dissociate water molecules by dissipating the absorbed energy, wherein high energy electrons are transferred to a primary electron acceptor, and wherein melanin, melanin precursors or melanin derivatives are used for the reverse reaction that comprises the union of atoms of hydrogen and oxygen generating water molecules, at least an electric current or chemical energy and/or
at least the electric current or the chemical energy is used as the external stimulus, particularly the external stimulus is voltage, current, pressure and/or temperature.

3. Motor device (100) according to one of the preceding claims,
**characterized in that** at least the electric current or the chemical energy is transformed into pressure.

4. Motor device (100) according to one of the preceding claims 2 or 3 **characterized in that** the artificial muscle is based on at least electroactive polymers (EAPs) that can be actuated at least through the application of the electric current in form of an electric field comprising piezoelectric polymers, dielectric actuators (10) (DEAs), electrostrictive graft elastomers, liquid crystal elastomers (LCE) or ferroelectric polymers, or Ionic EAPs that can be actuated at least through the chemical energy in form of a diffusion of ions in the aqueous solution, particularly in an electrolyte solution, in addition to the application of the electric current in form of the electric field or either alone, the artificial muscle is based at least on polyelectrode gels, ionomeric polymer metallic composites (IPMC), conductive polymers, electrorheological fluids (ERF) or carbon nanotubes, or pneumatic artificial muscles (PAMs) that can be actuated at least through overpressure or underpressure operation, or shape-memory alloys (SMAs) that can be actuated at least through the application of thermal energy.

5. Motor device (100) according to one of claims 1 to 3,
**characterized in that** the actuator (10) is formed of muscle tissue, particularly of actin (80) and myosin (90), wherein the muscle tissue is formed and arranged in such a manner that it contracts in response to the external stimulus if the external stimulus increases to a certain threshold, and that the muscle tissue relaxes if the external stimulus decreases to a certain threshold.

6. Motor device (100) according to one of the preceding claims 2 to 5,
**characterized in that** melanin, melanin precursors or melanin derivatives, the actuator (10) and the aqueous solution are located within a container (400) or a cell, particularly wherein
the container is transparent, in order to permit the light to pass through, wherein depending on the wavelength of the illumination that is going to be used, the walls are made of quartz.

7. Motor device (100) according to claim 6, **characterized in that** the final volume of the container ranges from 1 µl to 20 l, up to a maximum of 1000 l and/or the container is spherical, cubic, rhomboidal, polyhedric, plain concave, plain convex, biconvex, biconcave shape with microlens in a side and flat on the other side, cylindrical, circular cylindrical, hollow cylindrical, circular cone truncated cone, rectangular prism, oblique prism, rectangular pyramid, straight truncated pyramid, truncated spherical segment, spherical segmented, spherical sector, spherical with cylindrical perforation, sphere with conic perforations, torus, cylinder with slanted cut, cylindrical wedge, semi prism barrel, or combinations thereof.

8. Motor device (100) according to one of the preceding claims 2 to 7,
**characterized in that** at least the aqueous solution comprises electrolytes.

9. Motor device (100) according to one of the preceding claims 2 to 8,
a. **characterized in that** the melanin concentration in the aqueous solution ranges from 0.1% to 100% and/or
b. **characterized in that** the potassium concentration in the aqueous solution ranges from 0.1 to 10%, the sodium concentration ranges from 0.1 to 10%, the chlorine concentration ranges from 0.1 to 10%, the calcium concentration ranges from 0.1 to 10%, the iron concentration ranges from 0.1 to 8%, the copper concentration ranges from 0.1 to 5%, the arsenic concentration ranges from 0.1 to 8 or 9%, the gold concentration ranges from 0.1 to 8 or 9%, the silver concentration ranges from 0.1 to 8%, the nickel concentration ranges from 0.1 to 8% and/or
c. **characterized in that** the temperature of the aqueous solution fluctuates from 2°C to 45°C, especially from 45°C to 150°C and in most advantage from 200°C to 500°C and/or
d. **characterized in that** the frequency of change of the aqueous solution ranges from every 15 min to several months or 2 to 3 years.

10. Motor device (100) according to one of the preceding claims 2 to 9, **characterized in that** the inner or outer energy source (220) is an electromagnetic energy source, that is an emitter, particularly emitter particles, within the aqueous solution as an inner energy source (220), particularly wherein
the emitter, particularly the emitter particles, are from, but are not limited to at least one of the following substances: titanium-44, uranium 232, plutonium-238, nickel-63, silicon-32, argon-39, californium-249, silver-108, americium-241. niobium-91, carbon-14, curium-245, niobium¬94, plutonium-239, nickel-59, neptunium-236, uranium-233, technetium-99, uranium-234, chlorine-36, curium-248, aluminum-26, beryllium-10, zirconium-93, technetium-97, manganese¬53, technetium-98, palladium-107, curium-247, uranium-236, niobium-92, plutonium-244, samarium-235, potassium-40, uranium-238, thorium-232, lutetium-176, rhenium-187, rubidium¬87, lanthanum-138, samarium-147, platinum-190, barium-130, gadolinium-152, indium-115, hafnium-174, osmium-186, neodymium-144, samarium-148, cadmium-113, vanadium-50, tungsten-180, molybdenum-100, bismuth-209, zirconium-96, cadmium-116, selenium-82, tellurium-130, germanium-76, xenon-136, neodymium-150, calcium-48 or tellurium 128 or a combination of at least two of the aforementioned substances, preferably in form of mixed oxide.

11. Motor device (100) according to claim 2 to 8,
**characterized in that** light is used as the inner or outer energy source (220), particularly natural or synthetic light, coherent or not, monochromatic or polychromatic light with a wavelength mainly between 200 and 900 nm, preferably 390 and 750 nm, or invisible light, particularly ultraviolet light with a wavelength at least between 380 and 315 nm (UV-A), or between 315 and 280 nm (UV-B), or between 280 and 200 nm (UV-C-FUV), or between 200 and 100 nm (UV-C-VUV) or with a wavelength between 121 and 10 nmor (EUV), or infrared light with a wavelength at least between 780 nm and 1400 nm (NIR), or between 1,4 µm and 3,0 µm (SWIR), or between 3,0 µm and 8 µm (MWIR), or between 8 µm and 15 µm (LWIR), or a wavelength between 15 µm and 1 mm (FIR) and/or **characterized in that** sound is used as the inner or outer energy source (220), particularly ultrasound, in an interval of 20 kHz to 1 GHz, sound in an interval of 1 Mhz, mechanical stir or magnetic fields.

12. Motor device (100) according to one of the preceding claims
**characterized in that** the melanin, melanin precursors or melanin derivatives comprises at least one of the following: polihydroxyindole, eumelanin, feomelanin, alomelanin, neuromelanin, humic acid, fulerens, graphite, polyindolequinones, acetylene black, pyrrole black, indole black, benzene black, thiophene black, aniline black, poliquinones in hydrated form sepiomelanins, dopa black, dopamine black, adrenalin black, catechol black, 4-amine catechol black, in simple linear chain, aliphatics or aromatics; or their precursors as phenoles, aminophenols, or diphenols, indole poliphenols, ciclodopa DHI Y DHICA1, quinones, semiquinones or hydroquinones, L-tyrosine, L-dopamine, morpholin, ortho benzoquinone, dimorpholin, porphirin black, pterin black, ommochrome black, free nitrogen precursors, any of the above listed with any size or particles from 1 angstrom to 4 cm.

13. Motor device (100) according to one of the preceding claims 2 to 12,
**characterized in that** the energy supplied by the energy source (20) is transformed into kinetic energy and/or
**characterized in that** kinetic energy is transformed into a rotary movement.

14. Method for the actuation of a motor device (100), which is arranged to be actuated in response to an external stimulus comprising at least one actuator (10) and at least one energy source (20), wherein the energy source (20) supplies the external stimulus,
**characterized in that** the actuator (10) is an artificial muscle, wherein the energy source (20) is melanin, melanin precursors or melanin derivatives providing energy.

15. Method according to claim 14, **characterized in that** the motor device (100) according to claims 1 to 13 is used.

## Patentansprüche

1. Motorvorrichtung (100), die so eingerichtet ist, dass sie als Reaktion auf einen externen Stimulus betätigt wird, mit mindestens einem Aktor (10) und mindestens einer Energiequelle (20), wobei die Energiequelle (20) den externen Stimulus liefert, **dadurch gekennzeichnet, dass** der Aktor (10) ein künstlicher Muskel ist, wobei die Energiequelle (20) Melanin, ein Melaninvorläufer oder ein Melaninderivat ist, welches Energie liefert.

2. Motorvorrichtung (100) nach Anspruch 1,
**dadurch gekennzeichnet, dass** Melanin, Melaninvorläufer oder Melaninderivate in einer wässrigen Lösung enthalten sind, die Energie absorbiert, die durch eine elektromagnetische Strahlung, Schall oder Licht als innere oder äußere Energiequelle (220) erhalten wird, wobei Melanin, Melaninvorläufer oder Melaninderivate Wassermoleküle durch Dissipation der absorbierten Energie dissoziieren, wobei hochenergetische Elektronen auf einen primären Elektronenakzeptor übertragen werden, und wobei Melanin, Melaninvorläufer oder Melaninderivate für die Umkehrreaktion verwendet werden, die die Vereinigung von Wasserstoff- und Sauerstoffatomen unter Erzeugung von Wassermolekülen, mindestens eines elektrischen Stroms oder chemischer Energie umfasst und/oder mindestens der elektrische Strom oder die chemische Energie als externer Stimulus verwendet wird, wobei insbesondere der externe Stimulus Spannung, Strom, Druck und/oder Temperatur ist.

3. Motorvorrichtung (100) nach einem der vorhergehenden Ansprüche,
**dadurch gekennzeichnet, dass** zumindest der elektrische Strom oder die chemische Energie in Druck umgewandelt wird.

4. Motorvorrichtung (100) nach einem der vorhergehenden Ansprüche 2 oder 3
**dadurch gekennzeichnet, dass** der künstliche Muskel zumindest auf elektroaktiven Polymeren (EAPs) basiert, die zumindest durch das Anlegen des elektrischen Stroms in Form eines elektrischen Feldes betätigt werden können, umfassend piezoelektrische Polymere, dielektrische Aktoren (10) (DEAs), elektrostriktive Pfropfelastomere, Flüssigkristall-Elastomere (LCE) oder ferroelektrische Polymere, oder ionische EAPs, die zumindest durch die chemische Energie in Form einer Diffusion von Ionen in der wässrigen Lösung, insbesondere in einer Elektrolytlösung, betätigt werden können, wobei neben dem Anlegen des elektrischen Stroms in Form des elektrischen Feldes oder alternativ allein, der künstliche Muskel zumindest basiert auf Polyelektrodengelen, ionomeren polymeren Metallkompositen (IPMC), leitfähigen Polymeren, elektrorheologischen Flüssigkeiten (ERF) oder Kohlenstoffnanoröhren, oder pneumatischen künstlichen Muskeln (PAMs), die zumindest durch Über- oder Unterdruck betätigt werden können, oder Formgedächtnislegierungen (SMAs), die zumindest durch das Anlegen von Wärmeenergie betätigt werden können.

5. Motorvorrichtung (100) nach einem der Ansprüche 1 bis 3,
**dadurch gekennzeichnet, dass** der Aktor (10) aus Muskelgewebe, insbesondere aus Aktin (80) und Myosin (90), gebildet ist, wobei das Muskelgewebe so ausgebildet und angeordnet ist, dass es sich als Reaktion auf den äußeren Stimulus zusammenzieht, wenn der äußere Stimulus auf einen bestimmten Schwellenwert ansteigt, und dass sich das Muskelgewebe entspannt, wenn der äußere Stimulus auf einen bestimmten Schwellenwert abfällt.

6. Motorvorrichtung (100) nach einem der vorhergehenden Ansprüche 2 bis 5,
**dadurch gekennzeichnet, dass** sich Melanin, Melaninvorläufer oder Melaninderivate, der Aktor (10) und die wässrige Lösung in einem Behälter (400) oder einer Zelle befinden, wobei insbesondere der Behälter transparent ist, um das Licht durchzulassen, wobei die Wände je nach Wellenlänge der zu verwendenden Beleuchtung aus Quarz bestehen.

7. Motorvorrichtung (100) nach Anspruch 6, **dadurch gekennzeichnet, dass** das Endvolumen des Behälters im Bereich von 1 µl bis 20 I, maximal bis 1000 I liegt und/oder
der Behälter kugelförmig, kubisch, rhomboidisch, polyedrisch, einfach konkav, einfach konvex, bikonvex, bikonkav mit Mikrolinsen auf einer Seite und flach auf der anderen Seite, zylindrisch, kreiszylindrisch, hohlzylindrisch, kreiskegelstumpfförmig, ein rechteckiges Prisma, ein schiefes Prisma, eine rechteckige Pyramide, ein gerader Pyramidenstumpf, ein abgestumpftes Kugelsegment, eine segmentierte Kugel, ein Kugelsektor, eine Kugel mit zylindrischer Perforation, eine Kugel mit konischer Perforation, ein Torus, ein Zylinder mit schrägem Schnitt, ein zylindrischer Keil, eine Halbprismentonne oder eine Kombinationen davon ist.

8. Motorvorrichtung (100) nach einem der vorhergehenden Ansprüche 2 bis 7,
**dadurch gekennzeichnet, dass** zumindest die wässrige Lösung Elektrolyte enthält.

9. Motorvorrichtung (100) nach einem der vorhergehenden Ansprüche 2 bis 8,
a. **dadurch gekennzeichnet, dass** die Melaninkonzentration in der wässrigen Lösung zwischen 0,1 % und 100 % liegt und/oder
b. **dadurch gekennzeichnet, dass** die Kaliumkonzentration in der wässrigen Lösung im Bereich von 0,1 bis 10 %, die Natriumkonzentration im Bereich von 0,1 bis 10 %, die Chlorkonzentration im Bereich von 0,1 bis 10 %, die Calciumkonzentration im Bereich von 0,1 bis 10 %, die Eisenkonzentration im Bereich von 0.1 bis 8%, die Kupferkonzentration im Bereich von 0,1 bis 5%, die Arsenkonzentration im Bereich von 0,1 bis 8 oder 9%, die Goldkonzentration im Bereich von 0,1 bis 8 oder 9%, die Silberkonzentration im Bereich von 0,1 bis 8%, die Nickelkonzentration im Bereich von 0,1 bis 8% ist und/oder
c. **dadurch gekennzeichnet, dass** die Temperatur der wässrigen Lösung zwischen 2°C und 45°C, insbesondere zwischen 45°C und 150°C und vorzugsweise zwischen 200°C und 500°C schwankt und/oder
d. **dadurch gekennzeichnet, dass** die Häufigkeit des Wechselns der wässrigen Lösung von alle 15 Minuten bis zu mehreren Monaten oder 2 bis 3 Jahren reicht.

10. Motorvorrichtung (100) nach einem der vorhergehenden Ansprüche 2 bis 9,
**dadurch gekennzeichnet, dass** die innere oder äußere Energiequelle (220) eine elektromagnetische Energiequelle ist, die ein Emitter, insbesondere Emitterpartikel, innerhalb der wässrigen Lösung als innere Energiequelle (220) ist, wobei insbesondere der Emitter, insbesondere die Emitterpartikel, mindestens einen der folgenden Stoffe aufweist, aber nicht darauf beschränkt ist: Titan-44, Uran 232, Plutonium-238, Nickel-63, Silizium-32, Argon-39, Kalifornium-249, Silber-108, Americium-241, Niob-91, Kohlenstoff-14, Curium-245, Niob-94, Plutonium-239, Nickel-59, Neptunium-236, Uran-233, Technetium-99, Uran-234, Chlor-36, Curium-248, Aluminium-26, Beryllium-10, Zirkonium-93, Technetium-97, Mangan-53, Technetium-98, Palladium-107, Curium-247, Uran-236, Niob-92, Plutonium-244, Samarium-235, Kalium-40, Uran-238, Thorium-232, lutetium-176, Rhenium-187, Rubidium87, Lanthan-138, Samarium-147, Platin-190, Barium-130, Gadolinium-152, Indium-115, Hafnium-174, Osmium-186, Neodym-144, Samarium-148, Cadmium-113, Vanadium-50, Wolfram-180, Molybdän-100, Wismut-209, Zirkonium-96, Cadmium-116, Selen-82, Tellur-130, Germanium-76, Xenon-136, Neodym-150, Calcium-48 oder Tellur-128 oder eine Kombination von mindestens zwei der vorgenannten Stoffe, vorzugsweise in Form von einem Mischoxid.

11. Motorvorrichtung (100) nach einem der Ansprüche 2 bis 8,
**dadurch gekennzeichnet, dass** als innere oder äußere Energiequelle (220) Licht verwendet wird, insbesondere natürliches oder synthetisches, kohärentes oder nicht kohärentes, monochromatisches oder polychromatisches Licht mit einer Wellenlänge im Wesentlichen zwischen 200 und 900 nm, vorzugsweise 390 und 750 nm, oder unsichtbares Licht, insbesondere ultraviolettes Licht mit einer Wellenlänge mindestens zwischen 380 und 315 nm (UV-A), oder zwischen 315 und 280 nm (UV-B) oder zwischen 280 und 200 nm (UV-C-FUV), oder zwischen 200 und 100 nm (UV-C-VUV) oder mit einer Wellenlänge zwischen 121 und 10 nm oder (EUV), oder infrarotes Licht mit einer Wellenlänge mindestens zwischen 780 nm und 1400 nm (NIR), oder zwischen 1,4 µm und 3,0 µm (SWIR), oder zwischen 3,0 µm und 8 µm (MWIR), oder zwischen 8 µm und 15 µm (LWIR), oder einer Wellenlänge zwischen 15 µm und 1 mm (FIR) und/oder
**dadurch gekennzeichnet, dass** Schall als innere oder äußere Energiequelle (220) verwendet wird, insbesondere Ultraschall in einem Intervall von 20 kHz bis 1 GHz, Schall in einem Intervall von 1 Mhz, mechanische Bewegung oder Magnetfelder.

12. Motorvorrichtung (100) nach einem der vorhergehenden Ansprüche
**dadurch gekennzeichnet, dass** das Melanin, die Melaninvorläufer oder die Melaninderivate mindestens eine der folgenden Substanzen umfassen: Polihydroxyindol, Eumelanin, Feomelanin, Alomelanin, Neuromelanin, Huminsäure, Fulerens, Graphit, Polyindolchinone, Acetylenschwarz, Pyrrolschwarz, Indolschwarz, Benzolschwarz, Thiophenschwarz, Anilinschwarz, Poliquinone in hydratisierter Form, Sepiomelanine, Dopaschwarz, Dopaminschwarz, Adrenalinschwarz, Catecholschwarz, 4-Amin-Catecholschwarz, in einfacher linearer Kette, Aliphaten oder Aromaten; oder ihre Vorläufer wie Phenole, Aminophenole oder Diphenole, Indolpoliphenole, Ciclodopa DHI Y DHICA1, Chinone, Semichinone oder Hydrochinone, L-Tyrosin, L-Dopamin, Morpholin, Ortho-Benzochinon, Dimorpholin, Porphirinschwarz, Pterinschwarz, Ommochromschwarz, Vorläufer mit freiem Stickstoff, wobei jedes der oben genannten jede Größe oder Teilchen von 1 Angström bis 4 cm aufweist.

13. Motorvorrichtung (100) nach einem der vorhergehenden Ansprüche 2 bis 12,
**dadurch gekennzeichnet, dass** die von der Energiequelle (20) gelieferte Energie in kinetische Energie umgewandelt wird und/oder
**dadurch gekennzeichnet, dass** die kinetische Energie in eine Drehbewegung umgewandelt wird.

14. Verfahren zur Betätigung einer Motorvorrichtung (100), die dazu eingerichtet ist, in Reaktion auf einen externen Stimulus betätigt zu werden, mit mindestens einem Aktor (10) und mindestens einer Energiequelle (20), wobei die Energiequelle (20) den externen Stimulus liefert,
**dadurch gekennzeichnet, dass** der Aktor (10) ein künstlicher Muskel ist, wobei die Energiequelle (20) Melanin, ein Melaninvorläufer oder ein Melaninderivat ist, welches Energie liefert.

15. Verfahren nach Anspruch 14,
**dadurch gekennzeichnet, dass** die Motorvorrichtung (100) nach einem der Ansprüche 1 bis 13 verwendet wird.

## Revendications

1. Dispositif moteur (100) conçu pour être actionné en réponse à un stimulus externe, comprenant au moins un actionneur (10) et au moins une source d'énergie (20), la source d'énergie (20) fournissant le stimulus externe,
**caractérisé par le fait que** l'actionneur (10) est un muscle artificiel, dans lequel la source d'énergie (20) est de la mélanine, des précurseurs de la mélanine ou des dérivés de la mélanine fournissant de l'énergie.

2. Dispositif moteur (100) selon la revendication 1,
**caractérisé par le fait que** la mélanine, les précurseurs de la mélanine ou les dérivés de la mélanine sont contenus dans une solution aqueuse absorbant l'énergie obtenue par un rayonnement électromagnétique, un son ou une lumière en tant que source d'énergie interne ou externe (220), dans laquelle la mélanine, les précurseurs de la mélanine ou les dérivés de la mélanine dissocient les molécules d'eau en dissipant l'énergie absorbée, dans lequel les électrons à haute énergie sont transférés à un accepteur primaire d'électrons, et dans lequel la mélanine, les précurseurs de la mélanine ou les dérivés de la mélanine sont utilisés pour la réaction inverse qui comprend l'union d'atomes d'hydrogène et d'oxygène générant des molécules d'eau, au moins un courant électrique ou de l'énergie chimique, et/ou au moins le courant électrique ou l'énergie chimique est utilisé comme stimulus externe, en particulier le stimulus externe est la tension, le courant, la pression et/ou la température.

3. Dispositif moteur (100) selon l'une des revendications précédentes,
**caractérisé par le fait qu'**au moins le courant électrique ou l'énergie chimique est transformé en pression.

4. Dispositif moteur (100) selon l'une des revendications précédentes 2 ou 3 **caractérisé en ce que** le muscle artificiel est basé au moins sur des polymères électroactifs (EAP) actionnables au moins par l'application du courant électrique sous forme de champ électrique comprenant des polymères piézoélectriques, des actionneurs diélectriques (10) (DEA), des élastomères greffés électrostrictifs, des élastomères à cristaux liquides (LCE) ou des polymères ferroélectriques, ou des EAP ioniques actionnables au moins par l'énergie chimique sous forme d'une diffusion d'ions dans la solution aqueuse, notamment dans une solution électrolytique, outre l'application du courant électrique sous forme de champ électrique ou l'un ou l'autre seul, le muscle artificiel est basé au moins sur des gels de polyélectrodes, des composites métalliques à polymère ionomère (IPMC), des polymères conducteurs, des fluides électrorhéologiques (ERF) ou des nanotubes de carbone, ou des muscles artificiels pneumatiques (PAM) pouvant être actionnés au moins par un fonctionnement en surpression ou en dépression, ou des alliages à mémoire de forme (SMA) pouvant être actionnés au moins par l'application d'une énergie thermique.

5. Dispositif moteur (100) selon l'une des revendications 1 à 3,
**caractérisé par le fait que** l'actionneur (10) est formé de tissu musculaire, en particulier d'actine (80) et de myosine (90), le tissu musculaire étant formé et disposé de manière à se contracter en réponse au stimulus externe si celui-ci augmente jusqu'à un certain seuil, et à se détendre si le stimulus externe diminue jusqu'à un certain seuil.

6. Dispositif moteur (100) selon l'une des revendications précédentes 2 à 5, **caractérisé par le fait que** la mélanine, les précurseurs de la mélanine ou les dérivés de la mélanine, l'actionneur (10) et la solution aqueuse se trouvent dans un récipient (400) ou une cellule, en particulier dans le cas où
le récipient est transparent, afin de laisser passer la lumière, les parois étant en quartz en fonction de la longueur d'onde de l'éclairage qui sera utilisé.

7. Dispositif moteur (100) selon la revendication 6, **caractérisé par le fait que** le volume final du récipient est compris entre 1 µl et 20 l, jusqu'à un maximum de 1000 l et/ou le récipient a un forme sphérique, cubique, rhomboïdal, polyédrique, concave simple, convexe simple, biconvexe, biconcave avec des microlentilles sur un côté et plat sur l'autre, cylindrique, cylindrique circulaire, cylindrique creux, tronc de cône circulaire, prisme rectangulaire, prisme oblique, pyramide rectangulaire, pyramide tronquée droite, segment sphérique tronqué, secteur sphérique, sphère avec perforation cylindrique, sphère avec perforations coniques, torche, etc, pyramide rectangulaire, pyramide tronquée droite, segment sphérique tronqué, segment sphérique, secteur sphérique, sphère à perforation cylindrique, sphère à perforations coniques, tore, cylindre à coupe oblique, coin cylindrique, barillet semi prismatique, ou des combinaisons de ceux-ci.

8. Dispositif moteur (100) selon l'une des revendications précédentes 2 à 7,
**caractérisé par le fait qu'**au moins la solution aqueuse comprend des électrolytes.

9. Dispositif moteur (100) selon l'une des revendications précédentes 2 à 8,
a. **caractérisée par le fait que** la concentration de mélanine dans la solution aqueuse est comprise entre 0,1 % et 100 % et/ou
b. **caractérisée par le fait que** la concentration de potassium dans la solution aqueuse varie de 0,1 à 10 %, la concentration de sodium varie de 0,1 à 10 %, la concentration de chlore varie de 0,1 à 10 %, la concentration de calcium varie de 0,1 à 10 %, la concentration de fer varie de 0.1 à 8 %, la concentration en cuivre va de 0,1 à 5 %, la concentration en arsenic va de 0,1 à 8 ou 9 %, la concentration en or va de 0,1 à 8 ou 9 %, la concentration en argent va de 0,1 à 8 %, la concentration en nickel va de 0,1 à 8 % et/ou
c. **caractérisée par le fait que** la température de la solution aqueuse fluctue de 2°C à 45°C, en particulier de 45°C à 150°C et plus avantageusement de 200°C à 500°C et/ou
d. **caractérisé par le fait que** la fréquence de changement de la solution aqueuse va de toutes les 15 minutes à plusieurs mois ou 2 à 3 ans.

10. Dispositif moteur (100) selon l'une des revendications précédentes 2 à 9, **caractérisé en ce que** la source d'énergie interne ou externe (220) est une source d'énergie électromagnétique, c'est-à-dire un émetteur, en particulier des particules émettrices, dans la solution aqueuse en tant que source d'énergie interne (220), en particulier dans le cas où
l'émetteur, en particulier les particules émettrices, provient, sans s'y limiter, d'au moins une des substances suivantes : titane-44, uranium 232, plutonium-238, nickel-63, silicium-32, argon-39, californium-249, argent-108, américium-241, niobium-91, carbone-14, curium-245, niobium-94, plutonium-239, nickel-59, neptunium-236, uranium-233, technétium-99, uranium-234, chlore-36, curium-248, aluminium-26, béryllium-10, zirconium-93, technétium-97, manganèse-53, technétium-98, palladium-107, curium-247, uranium-236, niobium-92, plutonium-244, samarium-235, potassium-40, uranium-238, thorium-232, lutécium-176, rhénium-187, rubidium¬87, lanthane-138, samarium-147, platine-190, baryum-130, gadolinium-152, indium-115, hafnium-174, osmium-186, néodyme-144, samarium-148, cadmium-113, vanadium-50, tungstène-180, molybdène-100, bismuth-209, zirconium-96, cadmium-116, sélénium-82, tellure-130, germanium-76, xénon-136, néodyme-150, calcium-48 ou tellure 128 ou une combinaison d'au moins deux des substances susmentionnées, de préférence sous forme d'oxyde mixte.

11. Dispositif moteur (100) selon les revendications 2 à 8,
**caractérisé en ce que** la lumière est utilisée comme source d'énergie interne ou externe (220), en particulier la lumière naturelle ou synthétique, cohérente ou non, monochromatique ou polychromatique avec une longueur d'onde principalement comprise entre 200 et 900 nm, de préférence entre 390 et 750 nm, ou la lumière invisible, en particulier la lumière ultraviolette avec une longueur d'onde au moins comprise entre 380 et 315 nm (UV-A), ou entre 315 et 280 nm (UV-B), ou entre 280 et 200 nm (UV-C-FUV), ou entre 200 et 100 nm (UV-C-VUV) ou avec une longueur d'onde entre 121 et 10 nm (EUV), ou la lumière infrarouge avec une longueur d'onde au moins entre 780 nm et 1400 nm (NIR), ou entre 1,4 µm et 3,0 µm (SWIR), ou entre 3,0 µm et 8 µm (MWIR), ou entre 8 µm et 15 µm (LWIR), ou une longueur d'onde entre 15 µm et 1 mm (FIR), et/ou
**caractérisé par** l'utilisation du son comme source d'énergie interne ou externe (220), en particulier les ultrasons, dans un intervalle de 20 kHz à 1 GHz, le son dans un intervalle de 1 Mhz, l'agitation mécanique ou les champs magnétiques.

12. Dispositif moteur (100) selon l'une des revendications précédentes
**caractérisé par le fait que** la mélanine, les précurseurs de la mélanine ou les dérivés de la mélanine comprennent au moins l'un des éléments suivants : polihydroxyindole, eumélanine, feomélanine, alomélanine, neuromélanine, acide humique, fulérens, graphite, polyindolequinones, noir d'acétylène, noir de pyrrole, noir d'indole, noir de benzène, noir de thiophène, noir d'aniline, poliquinones sous forme hydratée sépiomélanines, noir de dopa, noir de dopamine, noir d'adrénaline, noir de catéchol, noir de catéchol 4-amine, en chaîne linéaire simple, aliphatiques ou aromatiques ; ou leurs précurseurs tels que phénoles, aminophénols ou diphénols, indole poliphénols, ciclodopa DHI Y DHICA1, quinones, semiquinones ou hydroquinones, L-tyrosine, L-dopamine, morpholine, ortho benzoquinone, dimorpholine, noir de porphirine, noir de ptérine, noir d'ommochrome, précurseurs d'azote libre, l'une quelconque des substances énumérées ci-dessus avec une taille ou des particules allant de 1 angström à 4 cm.

13. Dispositif moteur (100) selon l'une des revendications précédentes 2 à 12, **caractérisé par le fait que** l'énergie fournie par la source d'énergie (20) est transformée en énergie cinétique et/ou en énergie de la force se **caractérise par** la transformation de l'énergie cinétique en un mouvement de rotation.

14. Méthode d'actionnement d'un dispositif moteur (100), qui est conçu pour être actionné en réponse à un stimulus externe, comprenant au moins un actionneur (10) et au moins une source d'énergie (20), dans laquelle la source d'énergie (20) fournit le stimulus externe,
**caractérisé par le fait que** l'actionneur (10) est un muscle artificiel, dans lequel la source d'énergie (20) est de la mélanine, des précurseurs de la mélanine ou des dérivés de la mélanine fournissant de l'énergie.

15. Méthode selon la revendication 14,
**caractérisé par** l'utilisation du dispositif moteur (100) selon les revendications 1 à 13.
